# EUROPÄISCHE PATENTSCHRIFT

(11) **EP 3 738 111 B1**
(45) Veröffentlichungstag und Bekanntmachung des Hinweises auf die Patenterteilung: **29.09.2021**
(21) Anmeldenummer: 19716073.2
(22) Anmeldetag: 07.03.2019
(51) Int. Cl.: G08B 25/01

(54) **VERFAHREN ZUM BETRIEB EINES KRAFTFAHRZEUGS**
METHOD FOR OPERATING A MOTOR VEHICLE
PROCÉDÉ DE FONCTIONNEMENT D'UN VÉHICULE AUTOMOBILE

(30) Priorität: 15.05.2018 DE 102018207449
(43) Veröffentlichungstag der Anmeldung: 18.11.2020
(73) Patentinhaber: Audi AG, 85045 Ingolstadt (DE)
(72) Erfinder: ALBL, Sebastian, 85080 Gaimersheim (DE)
(86) Internationale Anmeldenummer: PCT/EP2019/055710
(87) Internationale Veröffentlichungsnummer: WO 2019/219264

(56) Entgegenhaltungen:
- WO-A1-2018/050680
- DE-A1-102008 035 680
- DE-A1-102016 218 382

## Beschreibung

Die Erfindung betrifft ein Verfahren zum Betrieb eines Kraftfahrzeugs, wobei eine einen Zustand eines Fahrzeuginsassen des Kraftfahrzeugs betreffende Zustandsinformation erfasst und die Zustandsinformation oder in Abhängigkeit der Zustandsinformation eine Notfallinformation an eine fahrzeugexterne Freigabeeinrichtung bereitgestellt wird. Daneben betrifft die Erfindung ein Kraftfahrzeug und eine Freigabeeinrichtung.

Es ist bekannt, durch biometrische Sensoren in einem autonomen Fahrzeug zu erkennen, wenn ein Passagier einen medizinischen Notfall erleidet. In diesem Fall kann eine Kraftfahrzeugeinrichtung, wie in der Druckschrift DE 10 2017 113 129 A1 beschrieben ist, Anweisungen von einem Notrufserver empfangen und einer durch diese Anweisungen festgelegte Strecke folgen. Zusätzlich kann der Notrufserver dem automatischen Fahrzeug die Erlaubnis erteilen, Notfallmanöver einzuleiten, also beispielsweise Geschwindigkeitsbeschränkungen zu überschreiben oder rote Ampeln zu überfahren. Zwar kann, insbesondere bei einer automatisierten Führung des Kraftfahrzeugs, trotz dieser Regelverletzungen ein sicherer Fahrbetrieb realisiert werden. Dennoch können entsprechende Regelverletzungen andere Verkehrsteilnehmer verunsichern bzw. sie dazu verleiten, ebenfalls Regelverletzungen zu begehen, da sie das beobachtete Kraftfahrzeugverhalten als Normalbetrieb fehlinterpretieren können.

Weiterhin beschreibt die DE 10 2016 218382 A1 ein Verfahren zum Fahrtbetrieb eines Fahrzeuges in einem Notfallmodus, dabei wird ein kritischer Gesundheitszustand des Fahrers durch Sensoren ermittelt. Im Notfall wird eine zentrale Stelle informiert und das Fahrzeug autonom zum nächsten Krankenhaus gesteuert. Ferner kann das Fahrzeug optische und akustische Warnhinweise ausgeben um den umgebenden Verkehr zu warnen.

Die WO 2018/050680 A1 offenbart ein Verfahren zum Betrieb eines Fahrzeuges, wobei Informationen zum Zustand eines Benutzers ermittelt und eine Zentrale übermittelt werden. Die Zentrale entscheidet daraufhin ob medizinische Hilfe nötig ist. Falls notwendig, kann das Fahrzeug autonom zu einer Zielposition gesteuert werden, dabei gibt dieses während der Fahrt optische und akustische Warnsignale aus.

Der Erfindung liegt somit die Aufgabe zugrunde, eine demgegenüber verbesserte Möglichkeit anzugeben, ein Kraftfahrzeug bei Erkennen eines medizinischen Notfalls schnell zu einem Zielort, beispielsweise einem Krankenhaus, zu führen, wobei insbesondere die Information anderer Verkehrsteilnehmer verbessert werden soll.

Die Aufgabe wird erfindungsgemäß durch ein Verfahren gemäß Anspruch 1 gelöst. Dabei wird wenn eine durch die Freigabeeinrichtung ausgewertete Notfallbedingung erfüllt ist, deren Erfüllung von der Zustandsinformation oder der Notfallinformation abhängt, einerseits durch die Freigabeeinrichtung eine Freigabeinformation an das Kraftfahrzeug gesendet wird, nach deren Empfang durch das Kraftfahrzeug eine Warnbeleuchtung des Kraftfahrzeugs aktiviert und/oder ein akustisches Warnsignal in das Fahrzeugumfeld abgestrahlt wird und/oder andererseits durch die Freigabeeinrichtung und/oder durch das Kraftfahrzeug nach Empfangen der Freigabenachricht eine Schaltanweisung an wenigstens eine zur Verkehrsregelung dienende Lichtsignalanlage gesendet wird, um die Lichtsignalanlage umzuschalten.

Durch die Aktivierung der Warnbeleuchtung bzw. das Abstrahlen des akustischen Warnsignals können weitere Verkehrsteilnehmer deutlich darauf hingewiesen werden, dass das Kraftfahrzeug während des Fahrbetrieb potentiell oder aktuell von geltenden Verkehrsregeln abweichen kann bzw. abweicht, also im Ergebnis mit Sonderrechten fährt. Erfindungsgemäß erfolgt eine entsprechende Hinweisgabe erst, nachdem sie durch die fahrzeugexterne Freigabeeinrichtung freigegeben wurde. Dies hat den Vorteil, dass auch Hinweise genutzt werden können, die im normalen Fahrbetrieb unzulässig wären, also beispielsweise gegen die Straßenverkehrsordnung, Lärmschutzvorgaben oder Ähnliches verstoßen würden.

Um entsprechende Warnungen bei Erfüllung der Notfallbedingung dennoch rechtssicher nutzen zu können, kann die fahrzeugexterne Freigabeeinrichtung insbesondere durch eine staatliche oder staatlich autorisierte Stelle betrieben werden, die einen entsprechenden Notfallbetrieb freigeben kann. Durch ein Senden von entsprechenden Schaltanweisungen an Lichtsignalanlagen kann zudem vermieden werden, dass das Fahrzeug beispielsweise rote Ampeln überfahren muss, um Kreuzungen schnell überqueren zu können. Stattdessen kann eine Lichtsignalanlage entsprechend geschaltet werden, womit das Kraftfahrzeug trotz Einhaltung geltender Verkehrsvorschriften Kreuzungen oder andere durch Lichtsignalanlagen geregelte Straßenbereiche zügig durchqueren kann. Da eine solche Steuerung von Lichtsignalanlagen nur tatsächlich Notsituationen möglich sein soll, ist erfindungsgemäß vorgesehen, dass diese Steuerung entweder direkt durch die insbesondere staatlich oder durch eine staatliche autorisierte Stelle betriebene Freigabeeinrichtung oder erst nach Erhalt einer Freigabenachricht von dieser erfolgen kann.

Die Freigabeinformation kann zeitlich und/oder räumlich begrenzt sein. Beispielsweise kann eine Nutzung der Warnbeleuchtung, des akustischen Warnsignals oder des Sendens von Schaltanweisungen nur entlang einer Route zu einem vorgegebenen Zielort, beispielsweise zu einem anzufahrenden Krankenhaus, in einem gewissen Umkreis, also beispielsweise in einer bestimmten Stadt oder in einem bestimmten Bezirk, oder nur für eine bestimmte Dauer von beispielsweise 10 Minuten freigegeben werden. Die Freigabenachricht kann beispielsweise kryptografisch signiert sein, um eine Manipulation der Freigabe auszuschließen.

Die Zustandsinformation kann durch eine kraftfahrzeugseitige Sensorik erfasst werden, beispielsweise durch eine Kamera, insbesondere eine Infrarotkamera, eine Lenk- und/oder Pedalsensorik, die Bedieneingaben des Fahrers überwacht, Temperatursensoren im Sitz oder Ähnliches. Alternativ oder ergänzend können am Körper des Fahrzeuginsassen getragene oder in diesen implantierte Erfassungseinrichtungen, beispielsweise Fitnessarmbänder, zur Erfassung der Zustandsinformation genutzt werden.

Als Warnbeleuchtung kann ein blaues Warnlicht, das insbesondere in einen Scheinwerfer und/oder in eine Rückleuchte des Kraftfahrzeugs (1) integriert ist, aktiviert werden. Ein solches Blaulicht wird von anderen Verkehrsteilnehmern intuitiv mit einem Fahren mit Sonderrechten, beispielsweise von Einsatzfahrzeugen, in Verbindung gebracht, so dass die weiteren Verkehrsteilnehmer ein von den Verkehrsregeln abweichendes Fahrverhalten des Kraftfahrzeugs erwarten. Prinzipiell kann ein Dauerlicht als Warnbeleuchtung genutzt werden, es ist jedoch typischerweise vorteilhaft, die Aufmerksamkeit weiterer Verkehrsteilnehmer zu erhöhen, indem beispielsweise ein Blinklicht genutzt wird. Ergänzend oder alternativ zu einer Integration in einen Scheinwerfer oder ein Rücklicht könnte auch eine, beispielsweise dachseitig angeordnete, Rundumkennleuchte als Blaulicht verwendet werden.

Das Warnsignal kann durch Aktivieren einer Sirene abgestrahlt werden. Hierbei wird insbesondere eine elektronische Sirene verwendet, die über Außenlautsprecher des Kraftfahrzeugs einen an- und abschwellenden Heulton ausgeben kann. Sirenen werden von weiteren Verkehrsteilnehmern ebenfalls mit einem Fahren mit Sonderrechten assoziiert, so dass sie besonders effektiv auf ein potentiell von den geltenden Verkehrsregeln abweichendes Fahrverhalten hinweisen können. Außenlautsprecher, die zur Ausgabe des Warnsignals, insbesondere der Sirene, genutzt werden, können im normalen Fahrbetrieb beispielsweise zur Ausgabe von künstlichen Motorgeräuschen in einem elektrisch betriebenen Kraftfahrzeug bzw. zur Modifikation von vorhandenen Motorgeräuschen genutzt werden.

Durch das Kraftfahrzeug oder die Freigabeeinrichtung kann bei Erfüllung der Notfallbedingung eine Fahrroute zu einem Zielort ermittelt werden, zu dem das Kraftfahrzeug, insbesondere automatisiert, geführt werden soll, wobei wenigstens eine auf der Fahrroute zwischen der Istposition des Kraftfahrzeugs und der Zielposition liegende Lichtsignalanlage, insbesondere eine Ampel, ermittelt und zur Freigabe der Fahrt des Kraftfahrzeugs entlang der Fahrroute eine Schaltanweisung an diese Lichtsignalanlage gesendet wird, um sie umzuschalten. Beispielsweise kann eine Ampel, der sich das Kraftfahrzeug nähert, auf Grün geschaltet werden und zugehörige Ampeln einer Einmündung oder einer Querstraße auf Rot.

Als Zielort kann in dem erfindungsgemäßen Verfahren insbesondere ein Krankenhaus oder eine Übernahmeposition, an der der Fahrzeuginsasse durch ein Rettungsfahrzeug übernommen wird, ermittelt werden. Hierzu kann eine Verarbeitungseinrichtung des Kraftfahrzeugs zunächst Krankenhäuser in der Umgebung des Kraftfahrzeugs ermitteln. Hierzu können beispielsweise im Kraftfahrzeug gespeicherte Kartendaten genutzt werden. Im einfachsten Fall wäre es möglich, dass nächstliegende Krankenhaus auszuwählen. Es ist jedoch auch möglich, dass zunächst ein Zeitfenster abgeschätzt wird, in dem ein Fahrzeuginsasse vorzugsweise in ein Krankenhaus eingeliefert werden sollte und es kann beispielsweise jenes Krankenhaus aus den innerhalb dieser Zeit erreichbaren Krankenhäusern ausgewählt werden, das für einen spezifischen erkannten Notfall am besten geeignet ist und/oder das freie Kapazitäten hat.

In einer bevorzugten Ausgestaltung des erfindungsgemäßen Verfahrens kann die Verarbeitungseinrichtung mit einem krankenhausseitigen System kommunizieren, um einerseits dem Krankenhaus Vorinformation, insbesondere Zustandsinformationen oder hieraus abgeleitete Informationen, beispielsweise eine vorläufige Diagnose, bereitzustellen. Andererseits kann über eine solche Kommunikation bereits vor oder während der Fahrt in Richtung des Krankenhauses ermittelt werde, ob das Krankenhaus den Fahrzeuginsassen annimmt, also insbesondere freie Kapazitäten hat. Ist dies nicht der Fall, kann ein anderes Krankenhaus ausgewählt werden.

Möglichkeiten zur Planung einer Fahrroute zu einem Zielort sind im Stand der Technik bekannt und sollen daher nicht detailliert erläutert werden. Da vorliegend eine möglichst schnelle Fahrt zum Zielort gewünscht ist, wird diese Route derart geplant, dass eine möglichst kurze voraussichtliche Fahrzeit erreicht wird. Im Rahmen der Routenplanung kann hierbei berücksichtigt werden, dass durch das Kraftfahrzeug, insbesondere nach Empfangen der Freigabeinformation, potentiell Verkehrsregeln verletzt werden können, also beispielsweise Geschwindigkeitsbegrenzungen überschritten werden können, bzw. eine Schaltung von Lichtsignalanlagen beeinflusst werden kann.

Zusätzlich zu den bereits erläuterten Hinweisen an weitere Verkehrsteilnehmer kann das Kraftfahrzeug dazu eingerichtet sein, insbesondere nur dann, wenn die Freigabeinformation empfangen wurde, drahtlos mit weiteren Kraftfahrzeugen zu kommunizieren, um diesen Fahranweisungen zu geben. Beispielsweise können andere Fahrzeuge angewiesen werden, einen Fahrweg freizugeben oder Ähnliches.

Durch eine kraftfahrzeugseitige Steuereinrichtung kann eine Erfüllung einer von der Zustandsinformation abhängigen Zustandsbedingung geprüft werde, wobei das Bereitstellen der Zustandsinformation oder der Notfallinformation an die Freigabevorrichtung und/oder das Aktivieren der Warnbeleuchtung und/oder das Abstrahlen des akustischen Warnsignals ausschließlich bei Erfüllung der Zustandsbedingung erfolgt. Anders ausgedrückt kann beispielsweise zunächst kraftfahrzeugseitig ermittelt werden, ob ein Notfall vorzuliegen scheint. Diese Überprüfung kann der Kommunikation mit der Freigabeeinrichtung vorgeschaltet sein, um unnötige Kommunikationen mit dieser zu vermeiden. Andererseits kann es auch vorteilhaft sein, auch bei Vorliegen der Freigabeinformationen ein Warnen durch die Warnbeleuchtung oder das Abstrahlen des Warnsignals nur dann durchzuführen, wenn aktuell die Zustandsbedingung erfüllt ist. Beispielsweise kann nach Empfangen der Freigabenachricht erkannt werden, dass sich der Zustand des Fahrzeuginsassen merklich gebessert hat, womit ein weiterer Notbetrieb nicht länger erforderlich ist.

Durch die oder eine kraftfahrzeugseitige Steuereinrichtung wird eine Erfüllung einer von der Zustandsinformation abhängigen Hinweisbedingung geprüft, wobei bei Erfüllung der Hinweisbedingung ein Hinweis an den Fahrzeuginsassen ausgegeben wird. Die Hinweisbedingung kann insbesondere auch erfüllt sein, wenn die Zustandsbedingung und/oder die Notfallbedingung nicht erfüllt sind. Beispielsweise kann die Hinweisbedingung bereits dann erfüllt werden, wenn in Abhängigkeit der Zustandsinformation ermittelt wird, dass der Gesundheitszustand des Fahrzeuginsassen potentiell mangelhaft ist, jedoch voraussichtlich seine Fahrtauglichkeit nicht beeinträchtigt ist. Der Fahrer kann somit frühzeitig auf mögliche Gesundheitsbeeinträchtigungen hingewiesen werden. Die Hinweisgabe kann optisch, insbesondere auf einem Display des Kraftfahrzeugs, akustisch, insbesondere durch eine Sprachausgabe, oder haptisch erfolgen.

Bei Erfüllung der Hinweisbedingung erfolgt eine automatische oder durch wenigstens eine Bedieneingabe des Fahrzeuginsassen gesteuerte Terminabstimmung mit einem fahrzeugexternen System. Dies kann insbesondere dazu dienen, automatisch oder auf eine Bedieneingabe hin einen Termin mit einem Arzt, beispielsweise einem Hausarzt, zu vereinbaren. Im Rahmen dieser Terminabstimmung kann bereits die Zustandsinformation oder eine hieraus abgeleitete Information an das fahrzeugexterne System bereitgestellt werden, beispielsweise um eine erforderliche Zeitdauer für den Termin abzuschätzen, dem behandelten Arzt vorbereitende Informationen bereitzustellen oder Ähnliches.

Durch die Bedieneingabe werden beispielsweise Einschränkungen möglicher Zeiten und/oder Tage für die Termine vorgegeben. Ergänzend oder alternativ wird ein Terminkalender, der beispielsweise fahrzeugseitig gespeichert ist oder durch eine mobile Kommunikationseinrichtung des Fahrzeuginsassen an das Fahrzeug bereitgestellt wird, ausgewertet, um eine verbesserte Terminabstimmung zu ermöglichen.

Neben dem erfindungsgemäßen Verfahren betrifft die Erfindung ein Kraftfahrzeug, das zur Durchführung des erfindungsgemäßen Verfahrens als das Kraftfahrzeug eingerichtet ist. Das Kraftfahrzeug kann eine fahrzeugseitige Sensorik zur Erfassung der Zustandsinformation und/oder eine Kommunikationseinrichtung zur Kommunikation mit weiteren Einrichtungen, die die Zustandsinformation ermitteln, aufzuweisen. Eine Verarbeitungseinrichtung des Kraftfahrzeugs kann die oder eine weitere Kommunikationseinrichtung ansteuern, um die Zustandsinformation bzw. Notfallinformation an die fahrzeugexterne Freigabeeinrichtung zu übertragen. Sie kann zudem dazu dienen, nach Empfang der Freigabenachricht die Warnbeleuchtung zu aktivieren, eine Ausgabeeinrichtung zur Ausgabe des akustischen Warnsignals zu aktivieren und/oder ein Senden von Schaltanweisungen an Lichtsignalanlagen auszulösen. Das erfindungsgemäße Kraftfahrzeug kann mit den zu den erfindungsgemäßen Verfahren erläuterten Merkmalen mit den dort genannten Vorteilen weitergebildet werden.

Insbesondere kann das Kraftfahrzeug eine als Blaulicht ausgebildete, insbesondere in einem Scheinwerfer oder in eine Rückleuchte des Kraftfahrzeugs integrierte, Warnbeleuchtung aufweisen, wobei eine Steuereinrichtung des Kraftfahrzeugs dazu eingerichtet ist, das Blaulicht bei Empfang der Freigabeinformation stets oder bei zusätzlicher Erfüllung einer Aktivierungsbedingung zu aktivieren. Die Aktivierungsbedingung kann insbesondere von der Zustandsinformation abhängen. Sie kann der vorangehend erläuterten Zustandsbedingung entsprechen.

Zudem betrifft die Erfindung eine Freigabeeinrichtung, die zur Teilnahme an dem erfindungsgemäßen Verfahren als die Freigabeeinrichtung ausgebildet ist. Die Freigabeeinrichtung kann insbesondere eine Kommunikationseinrichtung zur Kommunikation mit dem Kraftfahrzeug und optional mit wenigstens einer Lichtsignalanlage sowie eine Verarbeitungseinrichtung umfassen, die die Freigabebedingung auswertet.

Weitere Vorteile und Einzelheiten der vorliegenden Erfindung ergeben sich aus den folgenden Ausführungsbeispielen sowie den zugehörigen Zeichnungen. Hierbei zeigen schematisch:
- Fig. 1: ein Ausführungsbeispiel eines erfindungsgemäßen Kraftfahrzeugs, und
- Fig. 2: eine Fahrsituation des in Fig. 1 gezeigten Kraftfahrzeugs, in der ein Ausführungsbeispiel des erfindungsgemäßen Verfahrens mithilfe eines Ausführungsbeispiels der erfindungsgemäßen Freigabeeinrichtung durchgeführt wird.

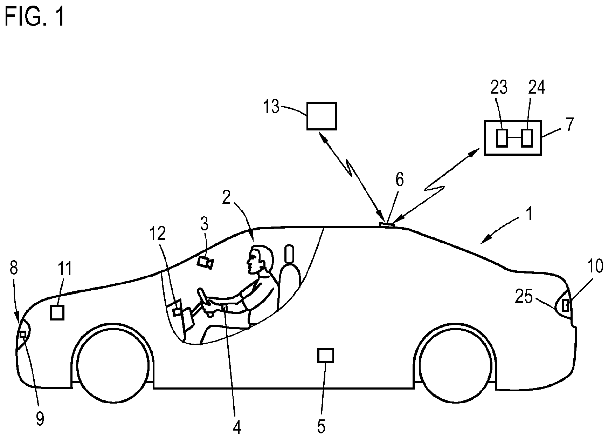

Fig. 1 zeigt ein Kraftfahrzeug 1, das dazu eingerichtet ist, einen Zustand eines Fahrzeuginsassen 2, im Beispiel eines Fahrers, zu erkennen. Wird hierbei ermittelt, dass potentiell ein medizinischer Notfall vorliegt, so wird das Kraftfahrzeug 1 automatisiert zu einem Krankenhaus oder zu einem Übernahmeort, an dem der Fahrzeuginsasse 2 beispielsweise durch einen Krankenwagen übernommen wird, geführt. Um diesen Zielort möglichst schnell zu erreichen, können auf dem Weg liegende Signalanlage passend geschaltet werden und es sollen Übertretungen einiger Verkehrsregeln durch das Kraftfahrzeug 1, beispielsweise von Geschwindigkeitsbeschränkungen, zulässig sein, wobei andere Verkehrsteilnehmer auf diese Fahrt mit "Sonderrechten" hingewiesen werden sollen. Um dies zu ermöglichen wird eine Freigabe von einer insbesondere durch eine staatliche Stelle betriebene Freigabeeinrichtung 7 eingeholt.

Um dies zu ermöglichen wird in dem Kraftfahrzeug 1 der Zustand des Fahrzeuginsassen 2 durch eine fahrzeugseitige Erfassungseinrichtung 3, beispielsweise eine Infrarotkamera, und eine an dem Fahrzeuginsassen 2 angeordnete oder in diesen implantierte insassenseitige Erfassungseinrichtung 4, beispielsweise ein Fitnessarmband, überwacht. Die derart ermittelten Zustandsinformationen werden durch eine kraftfahrzeugseitige Steuereinrichtung 5 verarbeitet. Diese wertet zunächst eine Zustandsbedingung aus, deren Erfüllung beispielsweise anzeigt, dass der Fahrzeuginsasse voraussichtlich dringend medizinische Hilfe benötigt. Die Steuereinrichtung 5 kann zudem erkennen, wenn ein Fahrer fahrunfähig ist und, falls das Kraftfahrzeug 1 nicht bereits automatisiert geführt wird, zu einer automatisierten Führung wechseln. Im Rahmen der automatisierten Führung werden querführende Fahrzeugsysteme, insbesondere eine Lenkung, und längsführende Fahrzeugsysteme, insbesondere ein Motor und Bremsen, des Kraftfahrzeugs 1 angesteuert. Verfahren zur automatisierten Führung von Kraftfahrzeugen sind im Stand der Technik prinzipiell bekannt und werden daher nicht näher erläutert. Daher sind auch die entsprechenden längs- und querführenden Komponenten in Fig. 1 nicht dargestellt.

Bei Erfüllung der Zustandsbedingung steuert die Steuereinrichtung 5 eine Kommunikationseinrichtung 6 des Kraftfahrzeugs 1 an, um eine Notfallinformation an eine fahrzeugexterne Freigabeeinrichtung 7 zu senden. Die Notfallinformation kann die Zustandsinformationen oder aus diesen abgeleitete Informationen umfassen und dient dazu, der Freigabeeinrichtung 7 eine Überprüfung zu ermöglichen, ob ein Notfall vorliegt, der einen Betrieb des Kraftfahrzeugs 1 mit Sonderrechen rechtfertigt. Die Notfallinformation wird über die Kommunikationseinrichtung 23 empfangen und eine Verarbeitungseinrichtung 24 der Freigabeeinrichtung 7 wertet anschließend eine von der Notfallinformation abhängende Notfallbedingung aus. Ist diese erfüllt, so wird über die Kommunikationseinrichtung 23 eine Freigabenachricht an das Kraftfahrzeug 1 gesendet.

Nach Empfang der Freigabenachricht kann die Steuereinrichtung 5 das Kraftfahrzeug 1 automatisiert zu einer Zielposition 17 führen, wobei beispielsweise bestimmte Verkehrsregeln missachtet werden können und/oder, wie später noch genauer erläutert werden wird, Lichtsignalanlagen derart geschaltet werden können, dass sie ein zügiges Passieren des Kraftfahrzeugs 1 ermöglichen.

Um weiteren Verkehrsteilnehmern unmittelbar und eindeutig zu verstehen zu geben, dass das Kraftfahrzeug 1 mit Sonderrechten bewegt wird, aktiviert die Steuereinrichtung 5 eine Warnbeleuchtung 9, 10 des Kraftfahrzeugs 1. Als Warnbeleuchtung 9 wird ein blinkendes Blaulicht im Scheinwerfer 8 benutzt. Die Warnbeleuchtung 10 ist ebenfalls ein Blaulicht, das in eine Rückleuchte 25 des Kraftfahrzeugs integriert ist. In alternativen Ausführungsbeispielen könnte auch nur eine der Warnbeleuchtungen 9, 10 genutzt werden oder es können zusätzliche weitere Warnbeleuchtungen 9, 10 genutzt werden. Zudem wird zur akustischen Hinweisgabe eine Sirene 11 aktiviert. Diese wird durch einen Außenlautsprecher gebildet, der im normalen Fahrbetrieb des Kraftfahrzeugs 1 beispielsweise künstliche Motorgeräusche herausgeben kann, um bei einem elektrischen Fahrbetrieb weitere Verkehrsteilnehmer auf die Anwesenheit des Kraftfahrzeugs 1 hinzuweisen. Bei Aktivierung der Sirene 11 wird ein an- und abschwellender Heulton ausgegeben.

Ergibt die Auswertung der Zustandsinformation, dass zwar die Zustandsbedingung und/oder die Notfallbedingung nicht erfüllt ist und somit der vorangehend beschriebene automatisierte Fahrbetrieb mit Sonderrechten nicht freigegeben wird, jedoch voraussichtlich eine gesundheitliche Beeinträchtigung des Fahrzeuginsassen 2 vorliegt, so gibt die Steuereinrichtung dem Fahrzeuginsassen 2 über die Anzeigeeinrichtung 12 einen entsprechenden Hinweis aus. Hierdurch kann der Fahrzeuginsasse 2 früh auf potentielle Gesundheitsprobleme bzw. -risiken hingewiesen werden. Zusätzlich erfolgt mit der Gabe dieses Hinweises eine Terminabstimmung mit einem fahrzeugexternen System 13, beispielsweise um einen Termin für den Fahrzeuginsassen bei einem Hausarzt zu vereinbaren.

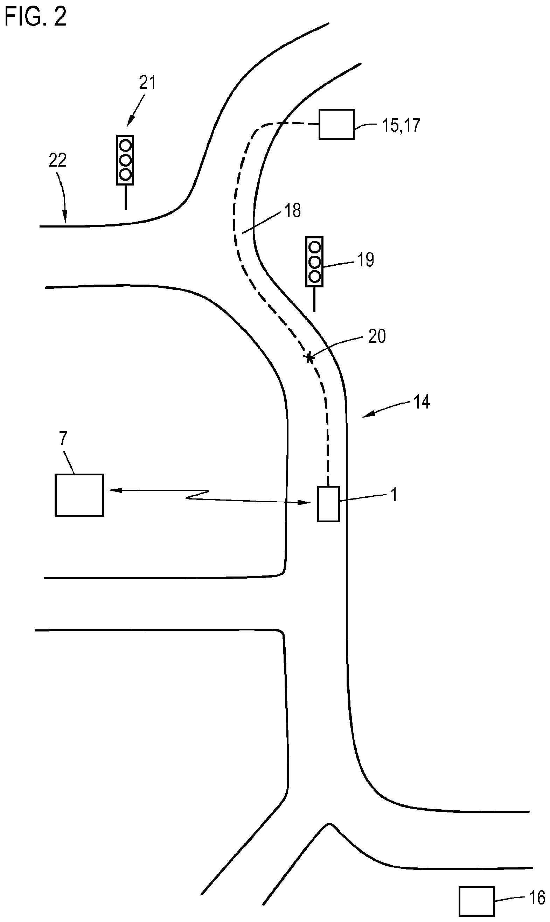

Das Vorgehen zur automatischen Führung des Kraftfahrzeugs zu der Zielposition 17 wird im Folgenden anhand eines Beispiels mit Bezug auf Fig. 2 näher erläutert. In der gezeigten Fahrsituation wird das Kraftfahrzeug 1 zunächst entlang der Straße 14 geführt. Die Führung kann hierbei zunächst manuell durch den Fahrzeuginsassen 2 oder automatisiert erfolgen. Wird nun, wie vorangehend erläutert, erkannt, dass der Fahrzeuginsasse voraussichtlich medizinischer Behandlung bedarf, kann das Kraftfahrzeug 1 automatisiert zu einem Krankenhaus 15, 16 geführt werden. Hierzu kann zunächst durch die Steuereinrichtung 5 ermittelt werden, wie zeitkritisch eine medizinische Betreuung des Fahrzeuginsassen 2 vermutlich ist und in Abhängigkeit hiervon können innerhalb dieses Zeitintervalls erreichbare Krankenhäuser 15, 16 oder andere Behandlungsmöglichkeiten ermittelt werden. Dies kann durch die Verarbeitungseinrichtung 5 selbst, beispielsweise mithilfe von in dem Kraftfahrzeug 1 gespeicherten Kartendaten, oder durch die Freigabeeinrichtung 7 erfolgen. Hierbei kann zudem mit Systemen der Krankenhäuser 15, 16 kommuniziert werden, um zu ermitteln, ob diese freie Kapazitäten haben, um den Fahrzeuginsassen 2 zu behandeln.

Wurde das Krankenhaus 15 als Zielort 17 ermittelt, wird eine Fahrroute 18 zu diesem Zielort berechnet und das Kraftfahrzeug 1 kann automatisiert entlang dieser Fahrroute 18 geführt werden. Hierbei können, da es sich um einen Notfall handelt, wie vorangehend erläutert, bestimmte Verkehrsregeln gebrochen werden und andere Verkehrsteilnehmer werden durch Betrieb der Warnbeleuchtungen 9, 10 sowie durch Ausgabe des Warnsignals der Sirene 11 auf diese Notsituation hingewiesen.

Um eine möglichst schnelle Führung des Kraftfahrzeugs 1 zum Zielort 17 zu ermöglichen, könnte durch das Kraftfahrzeug 1 selbst, nach Empfang der Freigabenachricht, oder durch die Freigabeeinrichtung 7 bedarfsgerecht eine Schaltanweisung an die Lichtsignalanlage 19 gesendet werden, um diese derart zu schalten, dass das Kraftfahrzeug 1 zügig passieren kann. Die Lichtsignalanlage 19 kann insbesondere eine Ampel sein, die, wenn sich beispielsweise das Kraftfahrzeug 1 an der Position 20 der Lichtsignalanlage 19 nähert, auf Grün geschaltet wird. Eine weitere Lichtsignalanlage 21, nämlich eine Ampel für die an der Stelle der Lichtsignalanlage 19 einmündende Seitenstraße 22 kann auf Rot geschaltet werden, um ein Passieren des Kraftfahrzeugs 1 zu ermöglichen.

## Patentansprüche

1. Verfahren zum Betrieb eines Kraftfahrzeugs (1), wobei eine einen Zustand eines Fahrzeuginsassen (2) des Kraftfahrzeugs (1) betreffende Zustandsinformation erfasst und die Zustandsinformation oder in Abhängigkeit der Zustandsinformation eine ermittelte Notfallinformation an eine fahrzeugexterne Freigabeeinrichtung (7) bereitgestellt wird, wobei wenn eine durch die Freigabeeinrichtung (7) ausgewertete Notfallbedingung erfüllt ist, deren Erfüllung von der Zustandsinformation oder der Notfallinformation abhängt, durch die Freigabeeinrichtung (7) eine Freigabeinformation an das Kraftfahrzeug (1) gesendet wird, nach deren Empfang durch das Kraftfahrzeug (1) eine Warnbeleuchtung (9, 10) des Kraftfahrzeugs (1) aktiviert und/oder ein akustisches Warnsignal in das Fahrzeugumfeld abgestrahlt wird, wobei durch eine kraftfahrzeugseitige Steuereinrichtung (5) eine Erfüllung einer von der Zustandsinformation abhängigen Hinweisbedingung geprüft wird, wobei bei Erfüllung der Hinweisbedingung ein Hinweis an den Fahrzeuginsassen (2) ausgegeben wird und eine automatische oder durch wenigstens eine Bedieneingabe des Fahrzeuginsassen (2) gesteuerte Terminabstimmung mit einem fahrzeugexternen System (13) erfolgt, wobei durch die Bedieneingabe Einschränkungen möglicher Zeiten und/oder Tage für die Termine vorgegeben werden und/oder wobei ein Terminkalender, der fahrzeugseitig gespeichert ist oder durch eine mobile Kommunikationseinrichtung des Fahrzeuginsassen (2) an das Kraftfahrzeug (1) bereitgestellt wird, im Rahmen der Terminabstimmung ausgewertet wird.

2. Verfahren nach Anspruch 1,
**dadurch gekennzeichnet,**
**dass** als Warnbeleuchtung (9, 10) ein blaues Warnlicht, das insbesondere in einen Scheinwerfer (8) und/oder in eine Rückleuchte (26) des Kraftfahrzeugs (1) integriert ist, aktiviert wird.

3. Verfahren nach Anspruch 1 oder 2,
**dadurch gekennzeichnet,**
**dass** das Warnsignal durch aktivieren einer Sirene (11) abgestrahlt wird.

4. Verfahren nach einem der vorangehenden Ansprüche,
**dadurch gekennzeichnet,**
**dass** durch die Freigabeeinrichtung (7) und/oder durch das Kraftfahrzeug (1) nach Empfang der Freigabenachricht eine Schaltanweisung an wenigstens eine zur Verkehrsregelung dienende Lichtsignalanlage (19, 21) gesendet wird, um die Lichtsignalanlage (19, 21) umzuschalten und/oder dass durch das Kraftfahrzeug (1) oder die Freigabeeinrichtung (7) bei Erfüllung der Notfallbedingung eine Fahrroute (18) zu einem Zielort (17) ermittelt wird, zu dem das Kraftfahrzeug (1), insbesondere automatisiert, geführt werden soll, wobei wenigstens eine auf der Fahrroute (18) zwischen der Istposition des Kraftfahrzeugs (1) und der Zielposition (17) liegende Lichtsignalanlage (19), insbesondere eine Ampel, ermittelt und zur Freigabe der Fahrt des Kraftfahrzeugs (1) entlang der Fahrroute (18) eine Schaltanweisung an diese Lichtsignalanlage (19) gesendet wird, um sie umzuschalten.

5. Verfahren nach einem der vorangehenden Ansprüche,
**dadurch gekennzeichnet,**
**dass** durch die kraftfahrzeugseitige Steuereinrichtung (5) eine Erfüllung einer von der Zustandsinformation abhängigen Zustandsbedingung geprüft wird, wobei das Bereitstellen der Zustandsinformation oder der Notfallinformation an die Freigabeeinrichtung (7) und/oder das Aktivieren der Warnbeleuchtung (9, 10) und/oder das Abstrahlen des akustischen Warnsignals ausschließlich bei Erfüllung der Zustandsbedingung erfolgt.

6. Kraftfahrzeug,
**dadurch gekennzeichnet,**
**dass** es zur Teilnahme an dem Verfahren nach einem der vorangehenden Ansprüche als das Kraftfahrzeug (1) eingerichtet ist.

7. Kraftfahrzeug nach Anspruch 6,
**dadurch gekennzeichnet,**
**dass** es eine als Blaulicht ausgebildete, insbesondere in einen Scheinwerfer (8) und/oder in eine Rückleuchte (26) des Kraftfahrzeugs (1) integrierte, Warnbeleuchtung (9, 10) aufweist, wobei eine Steuereinrichtung (5) des Kraftfahrzeugs (1) dazu eingerichtet ist, das Blaulicht bei Empfang der Freigabeinformation stets oder bei zusätzlicher Erfüllung einer Aktivierungsbedingung zu aktivieren.

## Claims

1. Method for operating a motor vehicle (1), wherein state information relating to a state of a vehicle occupant (2) of the motor vehicle (1) is recorded and the state information or, depending on the state information, determined emergency information is provided to an enabling apparatus (7) external to the vehicle, wherein, if an emergency condition evaluated by the enabling apparatus (7) is met, the meeting of which is dependent on the state information or the emergency information, the enabling apparatus (7) transmits enabling information to the motor vehicle (1), following the reception of which by the vehicle (1) a warning light (9, 10) of the motor vehicle (1) is activated and/or an acoustic warning signal is emitted to the vehicle surroundings, wherein
a control apparatus (5) in the motor vehicle checks whether an indication condition dependent on the state information is met, wherein if the indication condition is met an indication is output to the vehicle occupant (2) and an appointment is coordinated with a system (13) external to the vehicle automatically or by at least one operator input by the vehicle occupant (2), wherein restrictions on possible times and/or days for the appointments are specified by the operator input and/or wherein an appointment calendar which is stored in the vehicle or is provided to the motor vehicle (1) by a mobile communication apparatus of the vehicle occupant (2) is evaluated in the context of the appointment coordination.

2. Method according to claim 1, **characterised in that** a blue warning light, which is integrated in particular into a headlamp (8) and/or into a rear light (26) of the motor vehicle (1), is activated as the warning light (9, 10).

3. Method according to claim 1 or 2, **characterised in that** the warning signal is emitted by activating a siren (11).

4. Method according to any of the preceding claims, **characterised in that**
the enabling apparatus (7) and/or the motor vehicle (1), following reception of the enabling message, transmits a switching instruction to at least one light signal system (19, 21) used for traffic control in order to switch the light signal system (19, 21) and/or **in that** a travel route (18) to a destination (17) to which the motor vehicle (1) is to be guided, in particular automatically, is determined by the motor vehicle (1) or the enabling apparatus (7) when the emergency condition is met, wherein at least one light signal system (19), in particular a traffic light, located on the travel route (18) between the actual position of the motor vehicle (1) and the destination position (17) is determined and, in order to enable the travel of the motor vehicle (1) along the travel route (18), a switching instruction is transmitted to this light signal system (19) in order to switch it.

5. Method according to any of the preceding claims, **characterised in that** the control apparatus (5) in the motor vehicle checks whether a state condition dependent on the state information is met, wherein the state information or the emergency information is provided to the enabling apparatus (7) and/or the warning light (9, 10) is activated and/or the acoustic warning signal is emitted only if the state condition is met.

6. Motor vehicle, **characterised in that** it is configured to participate as the motor vehicle (1) in the method according to any of the preceding claims.

7. Motor vehicle according to claim 6, **characterised in that** it has a warning light (9, 10) in the form of a blue light, which is in particular integrated into a headlamp (8) and/or into a rear light (26) of the motor vehicle (1), wherein a control apparatus (5) of the motor vehicle (1) is configured to always activate the blue light on reception of the enabling information or when an activation condition is additionally met.

## Revendications

1. Procédé d'exploitation d'un véhicule automobile (1), dans lequel une information d'état concernant un état d'un occupant de véhicule (2) du véhicule automobile (1) est détectée et l'information d'état ou, en fonction de l'information d'état, une information d'urgence déterminée est mise à disposition d'un appareil de libération (7) externe au véhicule, dans lequel, si une condition d'urgence évaluée par l'appareil de libération (7) est satisfaite, dont la satisfaction dépend de l'information d'état ou de l'information d'urgence, une information de libération est envoyée au véhicule automobile (1) par le dispositif de libération (7), après la réception de laquelle information de libération par le véhicule automobile (1) un feu d'avertissement (9, 10) du véhicule automobile (1) est activé et/ou un signal d'avertissement sonore est diffusé dans l'environnement de véhicule, dans lequel
un dispositif de commande (5) côté véhicule automobile vérifie la satisfaction d'une condition d'information dépendant de l'information d'état, dans lequel, si la condition d'information est satisfaite, une information est délivrée à l'occupant de véhicule (2) et un rendez-vous est coordonné avec un système (13) externe au véhicule automatiquement ou commandé par au moins une entrée de commande de l'occupant de véhicule (2), dans lequel des restrictions d'heures et/ou de jours possibles pour les rendez-vous sont spécifiées par l'entrée de commande et/ou dans lequel un calendrier de rendez-vous qui est stocké côté véhicule ou qui est fourni au véhicule automobile (1) par un appareil de communication mobile de l'occupant de véhicule (2) est évalué dans le cadre de la coordination des rendez-vous.

2. Procédé selon la revendication 1,
**caractérisé en ce qu'**
un feu d'avertissement bleu, qui est intégré en particulier dans un phare (8) et/ou dans un feu arrière (26) du véhicule automobile (1), est activé comme feu d'avertissement (9, 10).

3. Procédé selon la revendication 1 ou 2,
**caractérisé en ce que**
le signal d'avertissement est émis en activant une sirène (11).

4. Procédé selon l'une quelconque des revendications précédentes,
**caractérisé en ce que**
une instruction de commutation est envoyée par l'appareil de libération (7) et/ou par le véhicule automobile (1) à au moins un système de feux de circulation (19, 21) servant à la régulation du trafic après réception du message de libération afin de commuter le système de feux de circulation (19, 21) et/ou **en ce qu'**un itinéraire (18) vers un lieu cible (17) vers lequel le véhicule automobile (1) doit être guidé, en particulier de manière automatique, est déterminé par le véhicule automobile (1) ou l'appareil de libération (7) lorsque la condition d'urgence est satisfaite, dans lequel au moins un système de feux de circulation (19), en particulier un feu de circulation, situé sur le trajet (18) entre la position réelle du véhicule automobile (1) et la position cible (17) est déterminé et, pour libérer la conduite du véhicule automobile (1) le long du trajet (18), une instruction de commutation est envoyée à ce système de feux de circulation (19) pour le commuter.

5. Procédé selon l'une des revendications précédentes,
**caractérisé en ce que**
l'appareil de commande (5) côté véhicule automobile vérifie la satisfaction d'une condition d'état dépendant de l'information d'état, dans lequel l'information d'état ou l'information d'urgence est fournie à l'appareil de libération (7) et/ou le feu d'avertissement (9, 10) est activé et/ou le signal d'avertissement acoustique est diffusé exclusivement lorsque la condition d'état est satisfaite.

6. Véhicule automobile,
**caractérisé en ce qu'**
il est adapté pour participer au procédé selon l'une quelconque des revendications précédentes en tant que véhicule automobile (1).

7. Véhicule automobile selon la revendication 6,
**caractérisé en ce qu'**
il présente un feu d'avertissement (9, 10) réalisé sous la forme d'une lumière bleue, en particulier intégré dans un phare (8) et/ou dans un feu arrière (26) du véhicule automobile (1), dans lequel un appareil de commande (5) du véhicule automobile (1) est configuré pour activer systématiquement la lumière bleue à la réception de l'information de validation ou lors de la satisfaction supplémentaire d'une condition d'activation.
